# FASCICULE DE BREVET EUROPEEN

(11) **EP 0 857 263 B1**
(45) Date de publication et mention de la délivrance du brevet: **07.05.2003**
(21) Numéro de dépôt: 97919120.2
(22) Date de dépôt: 17.09.1997
(51) Int. Cl.: F16D 13/75

(54) **EMBRAYAGE A FRICTION, EN PARTICULIER POUR VEHICULE AUTOMOBILE, COMPORTANT UN DISPOSITIF DE RATTRAPAGE D'USURE**
REIBUNGSKUPPLUNG FÜR KRAFTFAHRZEUGE MIT EINER VERSCHLEISS-NACHSTELLEINRICHTUNG
FRICTION CLUTCH, PARTICULARLY FOR MOTOR VEHICLE, COMPRISING A WEAR ADJUSTING DEVICE

(30) Priorité: 17.09.1996 FR 9611297; 26.12.1996 FR 9616044
(43) Date de publication de la demande: 12.08.1998
(73) Titulaire: VALEO EMBRAYAGES, 80009 Amiens Cedex 1 (FR)
(72) Inventeur: SCHUBERT, Florian, E-28009 Madrid (ES)
(74) Mandataire: Gamonal, Didier
(86) Numéro de dépôt international: FR9701646
(87) Numéro de publication internationale: WO98012447

(56) Documents cités:
- FR-A- 2 345 620
- FR-A- 2 424 442
- FR-A- 2 739 159
- US-A- 5 090 536

## Description

La présente invention concerne un embrayage à friction, en particulier pour véhicule automobile, et se rapporte plus particulièrement à un embrayage équipé d'un dispositif compensateur d'usure pour compenser l'usure notamment des garnitures de friction, ledit dispositif, dit ci-après dispositif de rattrapage d'usure, opérant au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage. Plus précisément la butée de débrayage agit sur le dispositif débrayeur de l'embrayage (les doigts du diaphragme), lequel contrecarre alors l'action des moyens embrayeur de l'embrayage (la partie périphérique du diaphragme en forme de rondelle Belleville) agissant sur le plateau de pression.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions (positions) de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant. globalement la même position lorsque l'embrayage est en position d'engagement.

On a déjà proposé, par exemple dans la demande de brevet français déposée le 21 Septembre 1995 sous le numéro 95 11090 et publié sous le numéro 2 739 159, un embrayage à friction, en particulier pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes disposées circonférentiellement, placés axialement entre les moyens d'appui et le plateau de pression et adaptés à être entraînés en rotation grâce à une denture qu'ils portent à leur périphérie et avec laquelle coopère une vis sans fin, des moyens d'entraînement en rotation de la vis sans fin étant prévus, rendus opérationnels par l'usure des garnitures de friction lorsque l'embrayage est embrayé, les moyens d'entraînement en rotation de la vis sans fin étant constitués par une roue à rochet solidaire en rotation de la vis sans fin, la vis sans fin et la roue à rochet étant taillées dans une même pièce.

Un tel embrayage fonctionne bien, et donne satisfaction.

La présente invention a pour but de proposer un embrayage du type ci-dessus dans lequel le dispositif de rattrapage d'usure est plus simple et plus économique à réaliser, et d'encombrement réduit pouvant conduire à réduire également l'encombrement diamétral de l'embrayage.

Ainsi, selon l'invention, un embrayage à friction du type ci-dessus est caractérisé par le fait que les dents de la roue à rochet sont taillées à la périphérie externe du filet de la vis sans fin.

Grâce à cette disposition, la pièce unique constituant la vis sans fin et la roue à rochet est d'une réalisation simple et économique ; il est possible, par exemple, de l'obtenir par découpe d'une pièce de grande longueur, du type profilé, suivie d'un décolletage. Par ailleurs, la longueur axiale d'une telle pièce unique est faible et la vis sans fin peut dès lors coopérer avec une denture de faible rayon de courbure : le dispositif de rattrapage peut, par voie de conséquence, être placé proche de l'axe de l'embrayage et l'encombrement diamétral de celui-ci être réduit.

Avantageusement, la vis sans fin est portée par un axe supporté par un support.

De préférence, la vis sans fin est montée à coulissement selon son axe en étant soumise à l'action d'un moyen élastique dit de rattrapage.

Avantageusement, le moyen élastique de rattrapage est un ressort hélicoïdal entourant l'axe qui porte la vis sans fin.

Avantageusement, l'axe et la vis sans fin sont d'une seule pièce ; en variante, l'axe est solidaire du support et la vis sans fin est montée à rotation sur l'axe.

Avantageusement, le moyen élastique de rattrapage est un ressort enroulé autour de l'axe en étant placé dans un logement prévu à l'intérieur de la roue à rochet ou vis sans fin.

Avantageusement, le moyen élastique de rattrapage est à l'extérieur de la vis sans fin en étant réalisé sous forme d'un étrier élastique chevauchant ladite vis.

De préférence, le support est constitué d'au moins une lamelle élastique liée, d'un côté, à l'axe autour duquel est montée à rotation la vis sans fin et, de l'autre côté, au couvercle, la vis sans fin étant commandée par un diaphragme constituant les moyens élastiques à action axiale.

Avantageusement, l'axe est incliné, par rapport à un plan perpendiculaire à l'axe de l'embrayage, d'un angle globalement égal à celui du filet de la vis sans fin.

Avantageusement, la denture que portent les moyens à rampes est disposée radialement à leur périphérie interne.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en plan d'un embrayage équipé d'un dispositif de rattrapage d'usure selon l'invention ;
- la figure 2 est une vue partielle en coupe selon II-II de la figure 1
- la figure 3 est une vue partielle latérale selon la flèche III de la figure 1;
- la figure 4 est une vue en coupe du support portant la vis sans fin ;
- la figure 5 est une vue en perspective de la vis *sans* fin intégrant la roue à rochet ;
- la figure 6 est une vue en perspective de l'organe élastique
- les figures 7 à 9 représentent chacune respectivement une variante du ressort d'actionnement ;
- la figure 10 est analogue à la figure 2 et représente une variante.

Dans ces figures, l'embrayage à diaphragme comporte un couvercle 202 de forme creuse ; ici, le couvercle est métallique en étant en tôle emboutie.

Ce couvercle comporte un-fond et des moyens pour sa fixation à un plateau de réaction, éventuellement divisé pour formation d'un volant amortisseur ; ici, les moyens de fixation du couvercle consistent en une jupe annulaire d'orientation axiale prolongeant un rebord radial doté de trous pour passage des organes de fixation, tels que des vis, du couvercle au plateau de réaction.

Ici, l'embrayage est du type tiré en sorte qu'il faut agir en traction sur l'extrémité interne des doigts du diaphragme pour désengager (débrayer) l'embrayage. La partie périphérique externe de la rondelle Belleville du diaphragme prend appui sur le fond du couvercle, sur un jonc non référence porté par la périphérie externe du fond du couvercle, en variante sur un embouti ménagé dans ledit fond. La partie périphérique interne de cette rondelle Belleville est en contact avec un appui décrit ci-après. D'une manière générale les doigts du diaphragme forment des moyens débrayeurs pour contrecarrer, sous l'action de la butée de débrayage, l'action des moyens élastiques embrayeurs constitués par la partie périphérique, en forme de rondelle Belleville, du diaphragme.

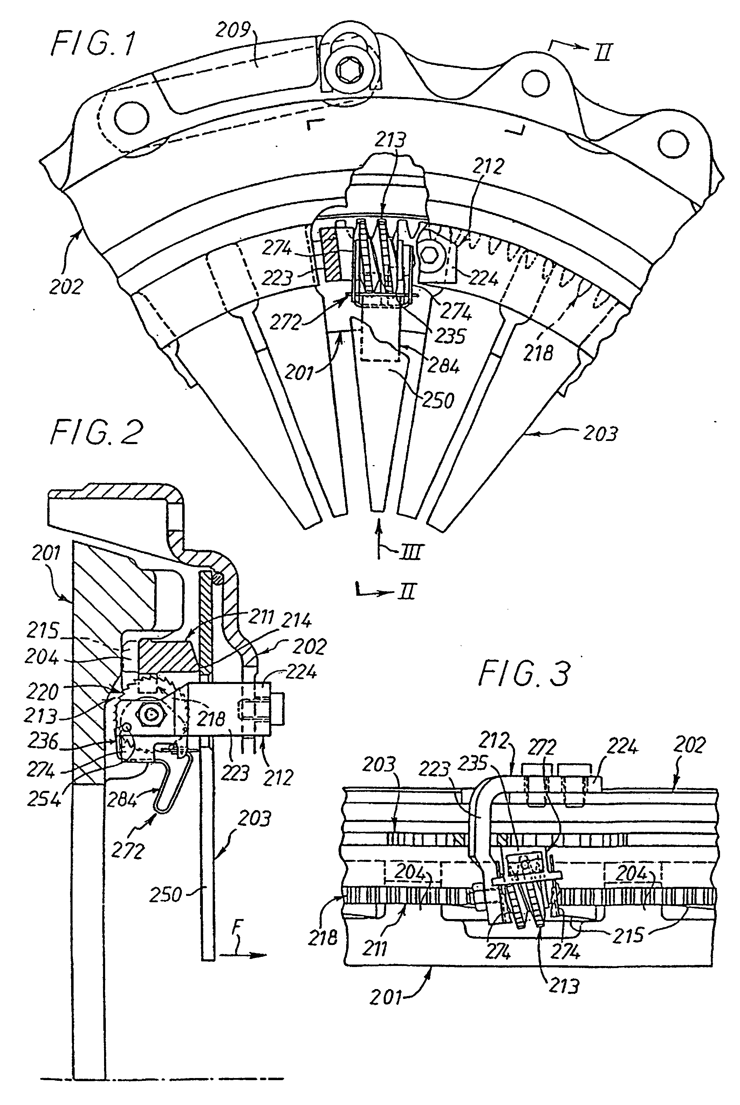

En se reportant aux figures 1 à 6, on voit un mécanisme d'embrayage à friction, notamment pour véhicule automobile, qui comprend un plateau de pression 201 destiné à coopérer par une face de friction avec un disque de friction non représenté, portant à sa périphérie externe des garnitures de friction, qui coopère lui-même avec un plateau de réaction.

Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses. Le disque de friction et le plateau de réaction sont représentés par exemple dans le document FR-A-2 599 446.

Le plateau de pression 201 est solidaire en rotation d'un couvercle 202 de forme creuse par l'intermédiaire de languettes tangentielles 209 qui, élastiques, constituent en même temps des moyens de rappel du plateau de pression 201 vers le couvercle 202.

Le plateau de pression 201, tout en étant solidaire en rotation du couvercle 202, est donc déplaçable axialement par rapport au couvercle 202 sous la sollicitation de moyens élastiques à action axiale commandés, ici un diaphragme 203 prenant appui sur le couvercle 202 par sa périphérie externe, l'embrayage étant ici du type tiré, l'opération de débrayage étant effectuée en agissant sur l'extrémité des doigts du diaphragme dans le sens de la flèche F de la figure 2.

Pour maintenir, lorsque l'embrayage est embrayé, les moyens élastiques à action axiale 203 dans une position indépendante de l'usure des garnitures du disque de friction, et dans une moindre mesure l'usure des plateaux de pression 201 et de réaction dont les faces, dites de friction, s'usent au contact des garnitures du disque, il est prévu un dispositif de rattrapage d'usure qui comprend des moyens à rampes 211 disposées circonférentiellement ; plus précisément, ces moyens à rampes 211, figures 2 et 3, sont métalliques et constitués d'un anneau présentant des rampes 215 disposées circonférentiellement sur sa face tournée vers le plateau de pression 201 ; sur sa face opposée, ledit anneau présente une zone d'appui 214 constituée par une arête supérieure disposée en arc de cercle centré sur l'axe de l'embrayage. Bien entendu, ladite zone d'appui 214 peut être continue ou discontinue.

Le plateau de pression 201 présente, sur sa face tournée vers le fond du couvercle 202, des plots 204 usinés venus ici de moulage répartis circonférentiellement à une distance l'un de l'autre qui correspond. à celle qui sépare circonférentiellement deux rampes 215 successives, les plots 204 étant destinés à coopérer chacun avec une rampe 215, en étant avantageusement chanfreinés à cet effet.

Les moyens à rampes 211 sont placés axialement entre le diaphragme 203 et le plateau de pression 201 en sorte que les plots 204 reçoivent les rampes 215 et le diaphragme 203 coopère avec la zone d'appui 214 qui constitue ainsi les moyens d'appui par l'intermédiaire desquels le diaphragme 203 agit sur le plateau de pression 201.

La périphérie interne des moyens à rampes 211 est munie radialement d'une denture 218.

Le dispositif de rattrapage d'usure comprend par ailleurs une roue à rochet 220 à dents inclinées 221 montée tournante autour d'un axe 222 qui porte également une vis sans fin 213 ; le filet et le pas de la vis sans fin 213 sont adaptés à la denture 218 des moyens à rampes 211 ; la vis sans fin 213 est amenée à coopérer avec la denture 218 dans les conditions qui seront décrites ci-après, le système vis sans fin 213 - denture 218 étant irréversible, la vis sans fin 213 pouvant entraîner la denture 218 mais pas l'inverse.

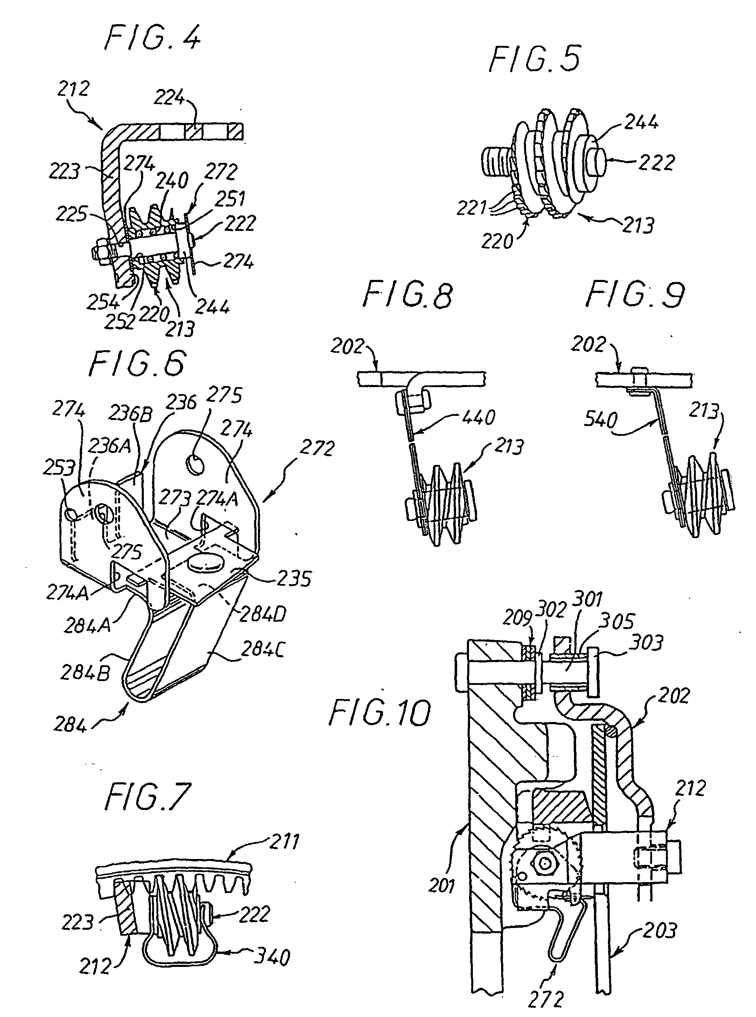

Selon l'invention, les dents 221 sont taillées à la périphérie externe du filet de la vis sans fin 213. Cette disposition, mieux visible sur les figures 4 et 5, est économique et simple. Par ailleurs, comme on le voit sur les figures 1 et 2, le dispositif de rattrapage est de faible longueur et peut être implanté dans une région proche du centre de l'embrayage ; la denture 218 est ménagée à la périphérie interne des moyens à rampes 211 et l'encombrement diamétral des moyens à rampes 211 et, par voie de conséquence celui du plateau de pression 20, et du couvercle 202, est réduit.

L'axe 222 est porté par un support 212, mieux visible sur les figures 3 et 4, en tôle découpée et pliée, en forme générale de L ayant deux ailes 223, 224 dont l'une, 223, est destinée à supporter l'axe 222 et dont l'autre, 224, est destinée à la fixation du support 212 sur le couvercle 202 ; à cet effet, l'aile 223 porte un trou circulaire 225 adapté à recevoir l'extrémité de l'axe 222, ici filetée pour recevoir un écrou de fixation. Selon une variante non représentée, l'aile 223 est munie d'un taraudage qui reçoit l'extrémité filetée de l'axe 222, ceci permettant de supprimer l'écrou.

Lorsque le support 212 est monté sur le couvercle 202, l'aile 224 est fixée sur le fond du couvercle 202 tandis que l'aile 223 traverse le diaphragme 203 entre deux de ses doigts qui, si nécessaire, peuvent écartés circonférentiellement plus que ne sont deux à deux les autres doigts. En variante, le support est monobloc avec le couvercle.

Le support 212 est adapté à recevoir un organe élastique 272, ici métallique et de plus faible épaisseur que le support, mieux visible sur la figure 6 ; l'organe élastique 272 est en forme générale de cavalier et comprend un corps plan 273 portant à chacune de ses extrémités un bras 274 muni d'un trou 275 adapté à recevoir l'axe 222 ; les deux bras 274 sont parallèles et s'étendent du même côté et globalement perpendiculairement par rapport au corps 273. Sur l'un de ses bords longitudinaux, le corps 273 se prolonge, entre les bras 274, selon une extension 284 qui comprend une première partie 284A dans le prolongement du corps 273, une deuxième partie 2848 dirigée dans le sens opposé à celui des bras 274 en faisant un angle aigu avec le corps 273, une troisième partie 284C formant un U avec la deuxième partie 284B et s'étendant parallèlement à celle-ci, et une quatrième partie 284D dirigée vers le corps 273 en étant parallèle à celui-ci, à un niveau légèrement supérieur en sorte qu'elle s'étend entre les bras 274 ; cette quatrième partie 284D reçoit, par exemple par rivetage, une plaquette en forme de T dont le pied 235 constitue une languette de commande 235 ; les deux bras du T traversent chacun une échancrure 274A ménagée dans chacun des bras 274 en sorte que la course de la languette de commande 235, parallèlement au corps 273, est limitée, au moins en éloignement du corps 273 ; sur son bord longitudinal. opposé à celui où se situe l'extension 284, le corps 273 porte un cliquet anti-retour 236 constitué ici de deux lames 236A, 236B de longueurs légèrement différentes s'étendant globalement perpendiculairement au corps 273 du même côté, par rapport à celui-ci, que celui où s'étendent les bras 274 ; l'arête intérieure de la languette de commande 235 et l'extrémité libre des lames 236A et 236B sont à distance l'une de l'autre et positionnées en sorte que, lorsque l'organe élastique 272 et la roue à rochet 220 sont montés dans le support 212, le cliquet anti-retour 236 et la languette de commande 235 coopèrent chacun élastiquement avec un pied de dent de la roue à rochet 220. Le bras 274, de l'organe élastique 272, en appui sur l'aile 223 du support 212, présente un trou 253, figure 44, destiné à coopérer avec un téton 254, figure 42, prévu sur la face interne de ladite aile 223 pour positionnement angulaire de l'organe élastique 272 par rapport au support 212. Le téton 254 peut être remplacé par une goupille ou toute autre protubérance.

L'axe 222 porte une collerette 244 au voisinage de son extrémité non filetée ; autour de l'axe 222 est placé un ressort hélicoïdal 240 constituant la moyen élastique de rattrapage, comme décrit ci-dessous ; ici, le ressort 240 est enroulé autour de l'axe 222 en étant placé dans un logement 251 prévu à l'intérieur de la roue à rochet 220 (ou vis sans fin 213) ; la roue à rochet 220 (ou vis sans fin 213) est centrée par rapport à l'axe 222, d'un côté, en portant rapport aux figures 3 et 4 ; la charge du diaphragme 203 n'étant plus appliquée sur les moyens à rampes 211, le seul effort à vaincre pour pouvoir faire tourner ces moyens à rampes 211 par rapport au plateau de pression 201 est l'effort de rappel des languettes tangentielles 209 ; si la charge du ressort hélicoïdal 240 est suffisante pour vaincre cet effort, alors le ressort 240 déplace la vis sans fin 213 qui est empêchée de tourner sur elle-même par la pression du cliquet anti-retour 236 et qui entraînera la denture 218 : en tournant sur elles-mêmes, les rampes 215 des moyens à rampes 211, par coopération avec les plots 204 du plateau de pression 201, éloigneront le plateau de pression 201 du fond du couvercle 202, augmentant ainsi la distance axiale entre la face de travail du plateau de pression 201 et les zones d'appui 214 des moyens à rampes 211, rattrapant ainsi au moins en partie l'usure des garnitures. La charge du ressort hélicoïdal 240 étant fonction de la quantité dont il aura été comprimé par la vis sans fin 213 durant les phases d'usure, on voit que plusieurs opérations d'embrayage et de débrayage peuvent être nécessaires avant que le dispositif de rattrapage d'usure n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une usure correspondant à trois dixièmes de millimètres.

Si l'usure a été suffisante pour que la roue à rochet 220 ait tourné suffisamment pour qu'au retour la languette 235 saute une dent, lors de l'opération d'embrayage, la languette 235, poussée par le doigt 250, fait tourner la roue à rochet 220 et les moyens à rampes 211, non encore serrés par le diaphragme 203, tournent et rattrapent l'usure ; en fin d'opération de rattrapage, le diaphragme, la roue à rochet 220, le criquet anti-retour 236 et la languette de commande 235 retrouvent leur position qu'ils occupaient à la figure 2.

La vis sans fin 213 et la roue à rochet 220 étant taillées dans une même pièce, comme on le voit, le support 212 équipé de cette même pièce, de dans son déplacement, le doigt 250 libère progressivement la languette de commande 235 dont l'extrémité suit la rampe inclinée constituée par la dent dans le pied de laquelle elle se trouvait dans l'étape précédente, les dents 221 de la roue à rochet 220 étant réalisées en sorte que, lors de cette course de débrayage garnitures neuves, l'extrémité de la languette de commande 235 ne saute pas une dent, le criquet anti-retour 236 maintenant la roue à rochet 220 ; ceci est obtenu par la venue en butée de la languette 235 contre le bord des échancrures 274A des ailes 274 du support 272.

Lorsque les garnitures s'usent, comme on le sait le plateau de pression 201, toujours soumis à l'effort axial du diaphragme 203, se rapproche du plateau de réaction qui est fixe axialement comme le couvercle 202 ; le doigt 250 du diaphragme 203 se rapproche donc du plateau de réaction, donc de l'extrémité ouverte du couvercle 202, en entraînant dans son mouvement la languette de commande 235 ; la roue à rochet 220 tourne autour de son axe dans le sens horaire, sens pour lequel le cliquet anti-retour 236 n'assure pas sa fonction mais peut sauter d'une dent à l'autre ; cet entraînement en rotation de la roue à rochet 220 conduit la vis sans fin 213 à tourner également sur son axe ; les moyens de rampes 211 étant immobilisés par rapport au couvercle 203 sous l'effet de la charge du diaphragme 203, la vis sans fin 213 qui engrène avec la denture 218 des moyens de rampes 211 se visse en quelque sorte sur cette denture 218 en comprimant le ressort hélicoïdal 240, le sens du filet de la vis sans fin 213 étant prévu en sorte qu'il en soit ainsi.

Lors de l'opération de débrayage qui suit la phase d'usure qui vient d'être décrite, le plateau de pression 201 libère les garnitures en s'éloignant d'elles sous l'action des languettes tangentielles 209 qui ramènent vers le fond du couvercle 202 le plateau de pression 201 ainsi que les moyens à rampes 211 en contact avec le diaphragme 203 par leurs zones d'appui 214 et avec les plots 204 du plateau de pression 201 par leurs rampes 215. Le ressort hélicoïdal 240 sollicite la vis sans fin 213 vers l'aile 223 du support 212, dont elle s'est éloignée en phases d'usure, c'est-à-dire de la droite vers la gauche par sur la collerette 244 dudit axe et, de l'autre côté, grâce à un redent circulaire intérieur 252 qu'elle présente ; le ressort 240 est ainsi placé axialement entre ledit redent 252 et la collerette 244 de l'axe 222 ; la roue à rochet 220 est au droit du cliquet anti-retour 236 qui, par coopération avec les dents 221 inclinées de la roue à rochet 220, empêche de tourner la roue à rochet 220, donc la vis sans fin 213, dans le sens contraire à celui des aiguilles d'une montre, par rapport à la figure 2.

Le support 212, portant la roue à rochet 220, la vis sans fin 213 et le ressort hélicoïdal 240, étant solidaire du couvercle 202, le diaphragme 203 se déplace par rapport à lui lors des opérations de débrayage et de ré-embrayage ; le diaphragme 203 est adapté par l'un de ses doigts, ici le doigt 250, à coopérer avec la languette de commande 235 de l'organe élastique 272; on comprendra que, grâce à cette disposition, lors du basculement du diaphragme 203 lors des opérations d'embrayage, la languette de commande 235 se déplace de la droite vers la gauche, par rapport à la figure 1, et, par coopération avec les dents 221 de la roue à rochet 220, est amenée à faire tourner la roue à rochet 220 dans le sens horaire ; lorsque le doigt 250 du diaphragme bascule vers la droite lors du débrayage, l'élasticité de l'organe élastique 272 et l'inclinaison des dents 221 font que la languette de commande 235 se déplace vers la droite en montant sur les dents 221 qui sont maintenues fixes en rotation par le cliquet anti-retour 236.

Le dispositif de rattrapage d'usure qui vient d'être décrit fonctionne comme suit.

La figure 2 représente l'embrayage engagé, les garnitures du disque de friction étant à l'état neuf et serrées entre le plateau de réaction, non représenté, et le plateau de pression 201. Dans cette position, la languette de commande 235 et le cliquet anti-retour 236 ont leur extrémité au pied d'une dent de la roue à rochet 220.

Lorsque l'embrayage est débrayé, l'extrémité des doigts du diaphragme 203 est sollicitée dans le sens de la flèche F vers le fond du couvercle 202 l'organe élastique 272, du ressort 240 et de l'axe 222 constitue un sous-ensemble prêt à être installé sur le couvercle 202.

Selon la variante qui vient d'être décrite, le ressort 240 est enroulé autour de l'axe 222 en étant logé à l'intérieur de la pièce unique compacte axialement formant roue à rochet 220 et vis sans fin' 213 ; selon la variante de la figure 7, le ressort est à l'extérieur de ladite pièce unique en étant réalisé sous forme d'un étrier élastique 340 chevauchant ladite pièce unique.

Il est possible de réaliser cette fonction élastique en supportant ladite pièce élastiquement par rapport. au couvercle ; ainsi, comme le montrent les figures 8 et 9, des lamelles élastiques liées, d'un côté, à l'axe. autour duquel est montée à rotation ladite pièce unique et, de l'autre côté, au couvercle 202 peuvent être utilisées pour ce faire : selon la figure 8, les lamelles 440 sont droites et liées au couvercle sur une patte rabattue de celui-ci ; selon la figure 9, ce sont les lamelles 540 qui présentent une patte rabattue pour liaison. au couvercle.

Comme le montrent les figures 3, 4, 8 et 9, l'axe 222 est incliné, par rapport à un plan perpendiculaire à l'axe de l'embrayage, globalement d'un angle égal à celui du filet de la vis sans fin 213 ; grâce à cette disposition, les dents constituant la denture 218 sont des dents droites, ce qui facilite l'entraînement par engrènement.

Comme cela a été décrit précédemment, lors de l'opération de débrayage qui suit une phase d'usure, le plateau de pression 201 libère les garnitures en s'éloignant d'elles sous l'action des languettes tangentielles 209 qui ramènent vers le fond du couvercle 202 le plateau de pression 201 et les moyens à rampes 211 ; pour être sûr que le ressort hélicoïdal 240 puisse actionner les moyens à rampes 211 sans être gêner par l'effort axial de rappel dû aux languettes tangentielles 209, il peut être avantageux de limiter la course du plateau de pression 201 lors des opérations de débrayage.

La variante de la figure 10 présente une disposition le permettant ; selon cette variante, le plateau de pression 201 porte un pion 301 axial, pouvant être par exemple un prolongement d'un rivet de fixation des languettes 209 au plateau 201 ; le pion 301 porte deux collerettes 302, 303 définissant des butées axiales.

Une bague 305 entoure le pion 301 et sa longueur axiale est inférieure à la longueur qui sépare axialement les deux collerettes 302 et 303, la différence desdites longueurs définissant un jeu axial.

La bague 305 est emmanchée dans un trou du bord du couvercle 202 dont elle est solidaire par friction, les butées axiales 302 et 303 étant disposées de part et d'autre dudit bord ; ledit jeu axial définit ainsi la course de rappel du plateau 201 par les languettes 209 ; ce jeu axial est constant quelle que soit l'usure des garnitures ; en effet, en cas d'usure de celles-ci, la bague 305 est déplacée par l'effort du diaphragme qui est supérieur à l'effort de friction entre la bague 305 et le couvercle 202, lequel effort étant supérieur à l'effort axial dû aux languettes 209.

Dans tout ce qui précède, les moyens anti-retour sont constitués par un cliquet qui coopère avec la roue à rochet ; en variante, ce sont des moyens de frottement, comme des patins de frottement par exemple.

On notera que le plateau de pression présente un bossage annulaire d'orientation axiale permettant de centrer intérieurement les moyens à rampes 211.

On appréciera que le dispositif de rattrapage d'usure est peu sensible aux vibrations axiales et torsionnelles, notamment à celles dues aux vibrations axiales du vilebrequin du moteur du véhicule automobile. Il est également peu sensible aux effets de la force centrifuge et aux phénomènes de déformations thermiques et de corrosion.

En effet l'irréversibilité de l'action de la vis sans fin sur une denture solidaire des moyens de rampe en liaison avec les moyens anti-retour empêche un fonctionnement intempestif du dispositif de rattrapage d'usure, compte tenu des vibrations, alors qu'il n'y a pas d'usure. Ainsi le plateau dépression ne peut pas entraîner la vis sans fin par l'intermédiaire des moyens de rampes.

La présence du support porté par le couvercle et portant la pièce de commande et les moyens anti-retour, en combinaison avec le centrage les moyens à rampes par le plateau de pression, permet au dispositif de rattrapage d'usure de bien résister aux phénomènes de la force centrifuge.

L'ensemble roue à rochet-vis sans fin-ressort hélicoïdal est peu encombrant et ne gêne pas la ventilation de l'embrayage.

L'action des moyens élastiques à action axiale sur la pièce de commande coopérant avec la roue à rochet permet de décoincer le dispositif de rattrapage d'usure.

Les moyens élastiques à action axiale peuvent avoir une autre forme comme décrit par exemple dans les demandes FR 97 11058 du 5 septembre 1997, FR 97 04213 et FR 97 04214 du 7 avril 1997.

Ainsi en se reportant aux figures 4,5 et 3,4 respectivement des documents FR 97 11058 et FR 97 04214 on voit qu'une rondelle Belleville est montée en série avec le diaphragme pour constituer les moyens élastiques embrayeurs à action axiale de l'embrayage. Le diaphragme étant en contact avec la languette de commande directement ou indirectement, par l'intermédiaire de moyens de transmission d'efforts intervenant entre la rondelle Belleville et le diaphragme.

La rondelle Belleville est une rondelle d'assistance du type positive.

Cette-rondelle d'assistance est par exemple dimensionnée en fonction des moyens de progressivité montés au sein du disque de friction.

Bien entendu la rondelle d'assistance peut être montée en parallèle avec le diaphragme , par exemple en agissant entre le couvercle et l'extrémité interne des doigts du diaphragme, tel que décrit dans le document FR-A 2 728 638.

Bien entendu, le dispositif de rattrapage d'usure peut avoir une autre forme. Il en est de même du support. Toutes les variantes de réalisations décrites dans la demande FR 96 11297 du 17-09-96 étant envisageables.

## Revendications

1. Embrayage à friction comportant un plateau de réaction destiné à être calé en rotation sur un arbre menant, un disque de friction, portant à sa périphérie externe des garnitures de friction, destiné à être calé en rotation sur un arbre mené, un plateau de pression (201), un couvercle (202) fixé sur le plateau de réaction, des moyens élastiques à action axiale (203) agissant entre, d'une part, le couvercle (202) et, d'autre part, le plateau de pression (201) par l'intermédiaire de moyens d'appui (214), le plateau de pression (201) étant solidaire en rotation du couvercle (202) tout en pouvant se déplacer axialement par rapport à lui et étant soumis à l'action de moyens élastiques de rappel (209) rappelant le plateau de pression (201) axialement vers le couvercle (202), ledit embrayage comportant également un dispositif de rattrapage d'usure comprenant des moyens à rampes (211) disposées circonférentiellement, placés axialement entre les moyens d'appui (214) et le plateau de pression (201) et adaptés à être entraînés en rotation grâce à une denture (218) qu'ils portent à leur périphérie et avec laquelle coopère une vis sans fin (213), des moyens d'entraînement en rotation (220) de la vis sans fin (213) étant prévus, rendus opérationnels par l'usure des garnitures de friction lorsque l'embrayage est embrayé, les moyens d'entraînement en rotation (220) de la vis sans fin (213) étant constitués par une roue à rochet solidaire en rotation de la vis sans fin (213), la vis sans fin (213) et la roue à rochet (220) étant taillées dans une même pièce, **caractérisé par le fait que** les dents (221) de la roue à rochet (220) sont taillées à la périphérie externe du filet de la vis sans fin (213).

2. Embrayage à friction selon la revendication 1, **caractérisé par le fait que** la vis sans fin (213) est portée par un axe (222) supporté par un support (212).

3. Embrayage à friction selon la revendication 2, **caractérisé par le fait que** la vis sans fin (213) est montée à coulissement selon son axe en étant soumise à l'action d'un moyen élastique dit de rattrapage (240, 340, 440, 540).

4. Embrayage à friction selon la revendication 3, **caractérisé par le fait que** le moyen élastique de rattrapage (240) est un ressort hélicoïdal entourant l'axe (222) qui porte la vis sans fin (213).

5. Embrayage à friction selon la revendication 2, **caractérisé par le fait que** l'axe (222) et la vis sans fin (213) sont d'une seule pièce.

6. Embrayage à friction selon la revendication 4, **caractérisé par** le lait que l'axe (222) est solidaire du support (212) et la vis sans fin (213) est montée à rotation sur l'axe (222).

7. Embrayage à friction selon la revendication 3, **caractérisé par le fait que** le moyen élastique de rattrapage est un ressort (240) enroulé autour de l'axe (222) en étant placé dans un logement (251) prévu à l'intérieur de la roue à rochet (220) ou vis sans fin (213).

8. Embrayage à friction selon la revendication 3, **caractérisé par le fait que** le moyen élastique de rattrapage est à l'extérieur de la vis salis fin (213) en étant réalisé sous forme d'un étrier élastique (340) chevauchant ladite vis (213).

9. Embrayage à friction selon la revendication 3, **caractérisé par le fait que** le support est constitué d'au moins une lamelle élastique (440, 540) liée, d'un côté, à l'axe autour duquel est montée à rotation la vis sans fin (213) et, de l'autre côté, au couvercle (202), la vis sans fin (213) étant commandée par un diaphragme (203) constituant les moyens élastiques à action axiale.

10. Embrayage à friction selon la revendication 2, **caractérisé par le fait que** l'axe (222) est incliné, par rapport à un plan perpendiculaire à l'axe de l'embrayage, d'un angle globalement égal à celui du filet de la vis sans fin (212).

11. Embrayage à friction selon la revendication 1, **caractérisé par le fait que** la denture (218) que portent les moyens à rampes (211) est disposée radialement à leur périphérie interne.

## Patentansprüche

1. Reibungskupplung mit einer Gegendruckplatte, die dazu bestimmt ist, drehfest auf einer Antriebswelle zu sitzen, einer Reibscheibe, die auf ihrem Außenumfang Reibbeläge trägt und die dazu bestimmt ist, drehfest auf einer Abtriebswelle zu sitzen, einer Druckplatte (201), einem Deckel (202), der an der Gegendruckplatte befestigt ist, axial wirksamen elastischen Mitteln (203), die zwischen einerseits dem Deckel (202) und andererseits der Druckplatte (201) vermittels Anlagemitteln (214) wirksam sind, wobei die Druckplatte (201) drehfest mit dem Deckel (202) verbunden ist, während sie sich gleichzeitig axial relativ zu diesem verschieben kann und der Einwirkung elastischer Rückhohlmittel (209) unterliegt, die die Druckplatte (201) axial zum Deckel (202) zurückhohlen, wobei die Kupplung ebenso eine Verschleißausgleichvorrichtung mit Rampenmitteln (211) umfasst, die in Umfangsrichtung angeordnet, axial zwischen den Anlagemitteln (214) und der Druckplatte (201) platziert und dafür ausgelegt sind, mittels einer Zahnung (218) in Drehung versetzt zu werden, die sie auf ihrem Umfang tragen und mit der eine Schnecke (213) zusammenwirkt, wobei Antriebsmittel (220) zur Drehung der Schnecke (213) vorgesehen sind, die durch die Abnutzung der Reibbeläge betätigt werden, wenn die Kupplung eingekuppelt wird, wobei die Antriebsmittel (220) zur Drehung der Schnecke (213) aus einem mit der Schnecke (213) drehfest verbundenen Sperrklinkenrad bestehen, wobei die Schnecke (213) und das Sperrklinkenrad (220) in ein und demselben Stück geschnitten sind, **dadurch gekennzeichnet, dass** die Zähne (221) des Sperrklinkenrads (220) am Außenumfang des Gewindes der Schnecke (213) geschnitten sind.

2. Reibungskupplung nach Anspruch 1, **dadurch gekennzeichnet, dass** die Schnecke (213) durch eine Achse (222) getragen wird, die durch eine Halterung (212) gehalten wird.

3. Reibungskupplung nach Anspruch 2, **dadurch gekennzeichnet, dass** die Schnecke (213) unter der Einwirkung eines elastischen Ausgleichmittels (240, 340, 440, 540) entlang einer Achse gleitend montiert ist.

4. Reibungskupplung nach Anspruch 3, **dadurch gekennzeichnet, dass** das elastische Ausgleichmittel (240) eine Schraubenfeder ist, die die Achse (222) umgibt, die die Schnecke (213) trägt.

5. Reibungskupplung nach Anspruch 2, **dadurch gekennzeichnet, dass** die Achse (222) und die Schnecke (213) aus einem einzelnen Stück bestehen.

6. Reibungskupplung nach Anspruch 4, **dadurch gekennzeichnet, dass** die Achse (222) mit dem Träger (212) fest verbunden ist und die Schnecke (213) um die Achse (222) drehbar montiert ist.

7. Reibungskupplung nach Anspruch 3, **dadurch gekennzeichnet, dass** das elastische Ausgleichmittel eine Feder (240) ist, die um die Achse (222) gewickelt ist, wobei sie in einer Aufnahme (251) platziert ist, die im Inneren des Sperrklinkenrads (220) oder der Schnecke (213) vorgesehen ist.

8. Reibungskupplung nach Anspruch 3, **dadurch gekennzeichnet, dass** das elastische Ausgleichmittel sich außerhalb der Schnecke (213) befindet und in Form eines elastischen Bügels (340) ausgeführt ist, der die Schnecke (213) umgreift.

9. Reibungskupplung nach Anspruch 3, **dadurch gekennzeichnet, dass** die Halterung aus zumindest einer elastischen Lamelle (440, 540) besteht, die auf einer Seite mit der Achse, um die drehbar die Schnecke (213) angebracht ist, und auf der anderen Seite mit dem Deckel (202) verbunden ist, wobei die Schnecke (213) durch eine Federplatte (203) betätigt wird, die die axial wirksamen elastischen Mittel bildet

10. Reibungskupplung nach Anspruch 2, **dadurch gekennzeichnet, dass** die Achse (222) relativ zu einer zur Kupplungsachse senkrechten Ebene um einen Winkel geneigt ist, der im wesentlichen gleich demjenigen des Gewindes der Schnecke (212) ist

11. Reibungskupplung nach Anspruch 1, **dadurch gekennzeichnet, dass** die Zahnung (218), die von den Rampenmitteln (211) getragen wird, radial an deren innerem Umfang angeordnet ist

## Claims

1. A friction clutch, comprising a reaction plate adapted to be mounted in rotation on a driving shaft, a friction disc carrying friction liners at its outer periphery and adapted to be mounted in rotation on a driven shaft, a pressure plate (201), a cover plate (202) fixed on the reaction plate, axially acting resilient means (203) acting between, firstly, the cover plate (202), and secondly, the pressure plate (201) through abutment means (214), the pressure plate (201) being fixed in rotation to the cover plate (202) while being able to be displaced axially with respect thereto and being subjected to the action of resilient return means (209) for returning the pressure plate (201) axially towards the cover plate (202), the said clutch further including a wear compensating device comprising circumferentially disposed ramp means (211) located axially between the abutment means (214) and the pressure plate (201) and adapted to be driven in rotation by means of a set of teeth (218), which they carry at their periphery and with which a worm (213) co-operates, means (220) being provided for driving the worm (213) in rotation and being rendered operational by wear in the friction liners when the clutch is engaged, the means (220) for driving the worm (213) in rotation consisting of a ratchet wheel fixed to the worm (213) for rotation therewith, the worm (213) and the ratchet wheel (220) being formed in one piece, **characterised by** the fact that the teeth (221) of the ratchet wheel (220) are formed at the outer periphery of the thread of the worm (213).

2. A friction clutch according to Claim 1, **characterised by** the fact that the worm (213) is carried by a shaft (222) supported by a support (212).

3. A friction clutch according to Claim 2, **characterised by** the fact that the worm (213) is mounted for sliding movement along its axis and is subjected to the action of a so-called resilient take-up means (240, 340, 440, 540).

4. A friction clutch according to Claim 3, **characterised by** the fact that the resilient take-up means (240) is a helical spring surrounding the shaft (222) that carries the worm (213).

5. A friction clutch according to Claim 2, **characterised by** the fact that the shaft (222) and the worm (213) are formed in one piece.

6. A friction clutch according to Claim 4, **characterised by** the fact that the shaft (222) is fixed to the support (212), and the worm (213) is mounted for rotation on the shaft (222).

7. A friction clutch according to Claim 3, **characterised by** the fact that the resilient take-up means is a spring (240) wound around the shaft (222) and located in a housing (251) disposed on the interior of the ratchet wheel (220) or worm (213).

8. A friction clutch according to Claim 3, **characterised by** the fact that the resilient take-up means is on the outside of the worm (213) and is made in the form of an elastic stirrup straddling the said worm (213).

9. A friction clutch according to Claim 3, **characterised by** the fact that the support consists of at least one elastic leaf (440, 540), connected on one side to the shaft around which the worm (213) is mounted for rotation, and on the other side to the cover plate (202), the worm (213) being controlled by a diaphragm (203) constituting the axially acting resilient means.

10. A friction clutch according to Claim 2, **characterised by** the fact that the shaft (222) is inclined, with respect to a plane at right angles to the axis of the clutch, by an angle which is generally equal to that of the thread of the worm (212). ??

11. A friction clutch according to Claim 1, **characterised by** the fact that the set of teeth (218) carried by the ramp means (211) is disposed radially at the inner periphery of the latter.
